# EUROPEAN PATENT APPLICATION

(11) **EP 2 996 356 A1**
(43) Date of publication of application: **16.03.2016**
(21) Application number: 15177912.1
(22) Date of filing: 22.07.2015
(51) Int. Cl.: H04W 4/00, H04L 29/08

(54) **GATEWAY, ELECTRONIC INFORMATION LABEL, AND METHOD FOR REGISTERING ELECTRONIC INFORMATION LABEL**

(30) Priority: 10.09.2014 KR 20140119616
(71) Applicant: Samsung Electro-Mechanics Co., Ltd., Gyeonggi-do (KR)
(72) Inventor: LEE, Chang Ju, Gyeonggi-do (KR)
(74) Representative: Grünecker Patent- und Rechtsanwälte PartG mbB

(57) **Abstract**

Disclosed is an electronic information label that electronically shows information of products displayed in the store, and a gateway that manages electronic labels by forming a group thereof. In the present disclosure, an electronic label accesses a gateway having a small data amount to be registered therewith. The gateway includes a first communicator, a second communicator, an electronic label registerer, and a product information gateway. The electronic label registerer may register an electronic label based on whether a sum of data amounts of registered electronic labels is greater than a reference value. The product information gateway may relay product information to an electronic label via a server.

The electronic label includes a communicator, a display, and a controller. The controller includes a product information display component and an electronic label registerer. The product information display component may receive product information and output the received product information to the display.

## Description

### CROSS-REFERENCE TO RELATED APPLICATION(S)

This application claims priority from Korean Patent Application No. 10-2014-0119616, filed on September 10, 2014, in the Korean Intellectual Property Office, the entire disclosure of which is incorporated herein by reference for all purposes.

### BACKGROUND

### 1. Field

The following description generally relates to techniques for electronic information labels that electronically show information on products displayed in a store.

### 2. Description of the Related Art

Paper labels attached to store shelves are inefficient in that the labels are required to be changed every time product prices are changed. As a substitute for the paper label, an electronic information label (EIL, hereinafter referred to as an electronic label) that electronically shows product information is known. The electronic label communicates with a management server through a gateway. Electronic labels that are managed through an identical gateway may form a group, and all the electronic information labels are separated into these groups, for each of which product information is updated. In order to reduce power consumption of electronic labels that are battery-powered, electronic labels go into a sleep mode except for the period when they are awake, i.e. 'the wake-up period', which is required for information updates. Electronic paper displays (EPDs) are used so that the electronic labels may display information even without a power supply. During the wake-up period, the electronic labels listen to communications from a management server, and if there is data to be received from the management server, the electronic labels receive and store the data which includes product information.

The electronic label transmits a connection request to a gateway having a good network environment by scanning frequencies. In the case where many electronic labels are connected to a specific gateway, it takes much time to update information of all the electronic labels connected to the gateway, since there is a limited number of wireless channels that can be used, thereby causing much latency in updating the electronic labels.

### SUMMARY

Disclosed is an electronic label system that includes numerous electronic labels, in which the system may reduce latency in updating product information of the electronic labels.

In one general aspect, a gateway may compare a sum of data amounts of registered electronic labels to a reference value, and may determine whether to additionally register an electronic label based on the comparison.

The reference value may be received from a management server.

The reference value may be calculated by a gateway based on information received from the management server.

In response to receiving a re-registration request from an electronic label of which registration has been rejected, the gateway may preferentially register the electronic label.

The electronic label may transmit a preferential registration request to a gateway having a small accumulated data amount of registered electronic labels among candidate gateways that are scanned.

The electronic label may determine a gateway that has failed to register as the last gateway in registration priorities.

### BRIEF DESCRIPTION OF THE DRAWINGS

FIG. 1 is a schematic diagram of an entire electronic label management system according to an exemplary embodiment.
FIG. 2 is a block diagram illustrating a gateway according to an exemplary embodiment.
FIG. 3 is a block diagram illustrating a gateway according to another exemplary embodiment.
FIG. 4 is a block diagram illustrating an electronic label according to an exemplary embodiment.
FIG. 5 is flowchart illustrating updating of product information after an electronic label is registered with a gateway according to an exemplary embodiment.
FIG. 6 is a flowchart illustrating updating of product information after an electronic label is registered with a gateway according to another exemplary embodiment.
FIG. 7 is a flowchart illustrating registering an electronic label with a gateway according to an exemplary embodiment.
FIG. 8 is a flowchart illustrating a method of registering an electronic label by a gateway according to an exemplary embodiment.
FIG. 9 is a flowchart illustrating a method of registering an electronic label by a gateway according to another exemplary embodiment.
FIG. 10 is a flowchart illustrating a method of registering an electronic label by a gateway according to yet another exemplary embodiment.
FIG. 11 is a flowchart illustrating a method of registering an electronic label according to an exemplary embodiment.
FIG. 12 is a flowchart illustrating a method of registering an electronic label device according to another exemplary embodiment.

Throughout the drawings and the detailed description, unless otherwise described, the same drawing reference numerals will be understood to refer to the same elements, features, and structures. The relative size and depiction of these elements may be exaggerated for clarity, illustration, and convenience.

### DETAILED DESCRIPTION

The following description is provided to assist the reader in gaining a comprehensive understanding of the methods, apparatuses, and/or systems described herein. Accordingly, various changes, modifications, and equivalents of the methods, apparatuses, and/or systems described herein will be suggested to those of ordinary skill in the art. Also, descriptions of well-known functions and constructions may be omitted for increased clarity and conciseness.

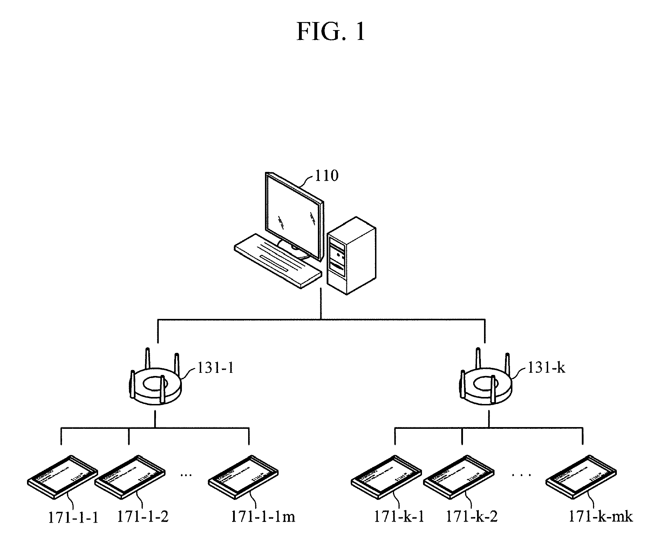

FIG. 1 is a schematic diagram of an entire electronic label management system according to an exemplary embodiment. As illustrated in FIG. 1, the electronic label management system 110 includes a management server 110, gateways 131-1, ... , and 131-k, and electronic labels 171-1-1, 171-1-2, ..., 171-1-1m, ..., 171-k-1, 171-k-2, ..., and 171-k-mk. In the exemplary embodiment, the management server 110 provides product information to be displayed on the electronic labels 171-1-1, 171-1-2, ..., 171-1-1m, ..., 171-k-1, 171-k-2, ..., and 171-k-mk, in which the information may, for example, include product names and prices, expiration dates, and the like. The gateways 131-1, ... , and 131-k may be wired-to-wireless converters and may be installed on the ceiling in a store.

In the exemplary embodiment, the electronic labels may form a group to be managed as at least one or more groups, and product information is updated for each group. The electronic labels remain in a sleep mode to save battery power, and they are woken up only when it is required to update product information. In the electronic label management system, the management server 110 and the gateways communicate with each other according to protocols defined on a PHY/MAC layer in accordance with near field wireless communication, for example, IEEE 802.15.4 standards. The management server 110 transmits, through the gateways, product information to the electronic labels that are managed as at least one or more groups.

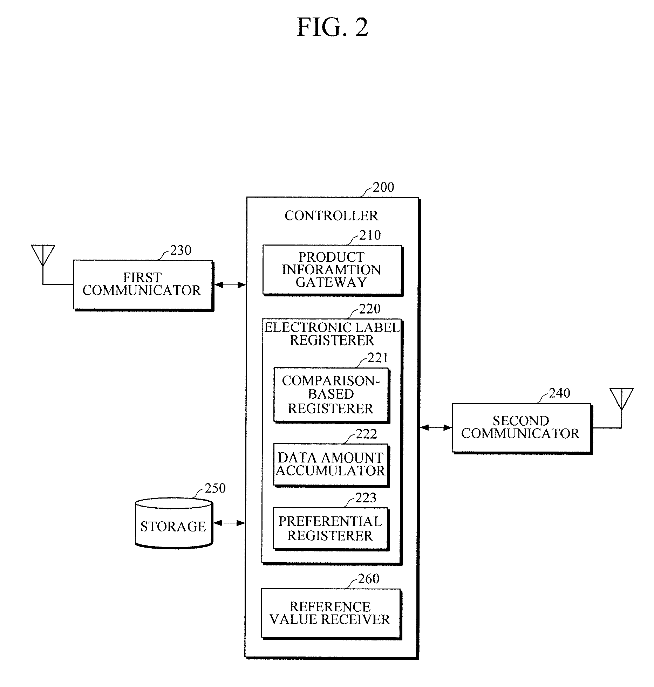

FIG. 2 is a block diagram illustrating a gateway according to an exemplary embodiment. The gateway includes a first communicator, a second communicator, and a controller. In the exemplary embodiment, the first communicator communicates with a management server via a cable or a communication line. The second communicator communicates with electronic labels according to protocols defined on a PHY/MAC layer in accordance with near field wireless communication, for example, IEEE 802.15.4 standards. The controller controls the entire gateways. The controller may include a microprocessor and programs executed by the microprocessor.

A manager forcibly wakes up an electronic label using a remote controller to initially register the electronic label after power is supplied from a battery. For example, a remote controller may include an electromagnet that generates a magnetic force when a switch of the remote controller is pressed. The electronic label includes a mechanical switch that is closed by the magnetic force of a remote controller. When the switch is closed, an interrupt signal is applied to a microprocessor that is in a sleep mode to convert the microprocessor into a wake-up mode. An electronic label that has woken up scans gateways by scanning wake-up channels to form a wireless network. Once a gateway is scanned, an electronic label is activated to be registered with the gateway. In response to receiving a registration request from the electronic label, the gateway determines whether to register the electronic label and registers the electronic label.

In the exemplary embodiment, the controller includes an electronic label registerer. The electronic label registerer registers an electronic label according to whether a sum of data amounts of previously registered electronic labels is greater than a reference value. The gateway determines whether to register an electronic label that has requested registration according to data amounts of registered electronic labels. As a data size of images and/or characters to be displayed on each electronic label may be different, data amounts to be transmitted from gateways to each electronic label may vary depending on the data size. Further, additional product information or other promotion information displayed on some electronic labels may also lead to an increase in an amount of data to be updated.

In the exemplary embodiment, the determination on whether to register an electronic label that has requested registration may be made based on the number of electronic labels registered with a gateway, since in most cases, product information to be updated or a data amount of electronic labels is similar to each other. In another exemplary embodiment, the determination on whether to register an electronic label that has requested registration may be made based on a data amount determined by a sum of data amounts of registered electronic labels, i.e., a data amount to be processed by a gateway. A reference value, based on which the electronic label registerer determines to register an electronic label, may be calculated by a server and /or a gateway.

The controller includes a product information gateway. After an initial activation, the product information gateway receives product information by transmitting and receiving an information Inquiry Request frame and an information Inquiry Response frame in a data channel, and displays the received product information.

The product information gateway communicates with a management server through, for example, the first communicator that is a wired network, and communicates with electronic labels registered through the second communicator, so as to relay product information to electronic labels. In the exemplary embodiment, the gateway may communicate with electronic labels via a wireless network which is, for example, a wireless network that is based on 2.4 GHz Zigbee physical layer.

Further, the electronic label registerer may include a data amount accumulator and a comparison-based registerer. For example, the gateway may include a storage that stores a sum of data amounts of electronic labels previously registered with the gateway. The storage may include a semiconductor memory, such as a hard disk or a flash memory, and the like.

The data amount accumulator calculates an accumulated amount of data that is obtained by adding a data amount of an electronic label that has requested registration to a sum of data amounts of previously registered electronic labels. Once the second communicator receives a registration request signal from an electronic label that has not been registered, the data amount accumulator reads, from the storage, a sum of data amounts of previously registered electronic labels. Then, the data amount accumulator adds the sum of data amounts of previously registered electronic labels to a data amount of the electronic label that has transmitted the registration request signal. A value obtained by adding a data amount of the electronic label that has requested registration to the sum of data amounts of previously registered electronic labels is a reference value used to determine whether to register an electronic label that has requested registration. If an electronic label is not registered, the data amount accumulator does not update a value stored in the storage. If an electronic label is registered, the data amount accumulator updates a stored value to a new accumulated data amount obtained by adding a data amount of a newly registered electronic label to a previous accumulated data amount.

The comparison-based registerer compares an accumulated value calculated by the data amount accumulator to a reference value to determine whether to register an electronic label, and registers the electronic label according to the determination. The gateway determines whether to register an electronic label that has requested registration according to data amounts of previously registered electronic labels. A data size of images and /or characters to be displayed on each electronic label may be different. A reference value, based on which the electronic label registerer determines to register an electronic label, is calculated by a server and/or a gateway. If an accumulated value calculated by the data amount accumulator is greater than a reference value, the comparison-based registerer rejects registration of the electronic label. If the accumulated value is lower than the reference value, the comparison-based registerer registers the electronic label.

The controller may further include a reference value receiver. The reference value receiver receives a reference value from a management server via the first communicator and stores the received reference value. For example, the reference value may be determined by a manager in consideration of a number of electronic labels in a store, a data amount of each electronic label, and a number of gateways. In another example, the reference value may be automatically calculated based on the above consideration by a management server that manages information of gateways and electronic labels. The reference value receiver receives the calculated reference value from a server. The gateway includes a storage in which the reference value received by the reference value receiver may be stored.

The electronic label registerer 220 may further include a preferential registerer 223. In response to receiving a re-registration request signal from an electronic label that has been rejected to be registered, the preferential registerer 223 preferentially registers the electronic label. If an electronic label is rejected to be registered by all the gateways, this indicates that electronic labels have already been registered with all the gateways in an area at a level above a reference value, or other gateways are out of order. In this case, since the electronic label that was rejected to be registered may not be connected to a network, the preferential registerer 223 preferentially registers the electronic label.

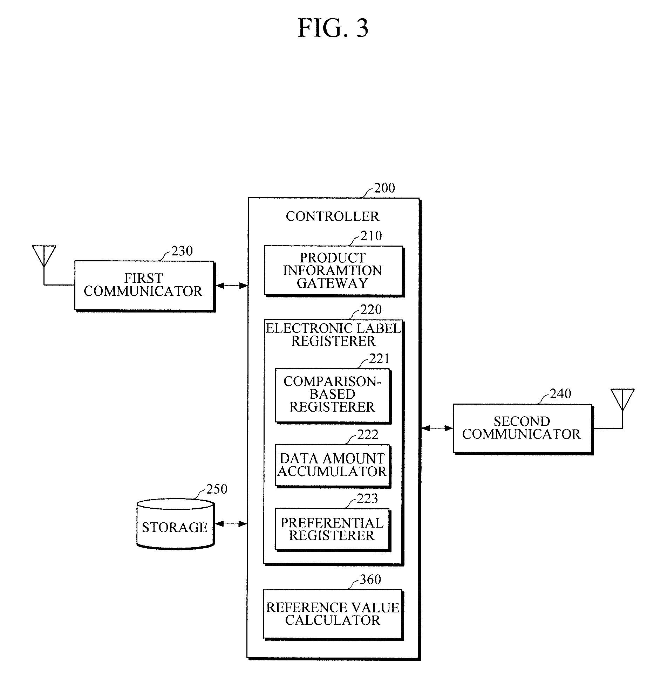

FIG. 3 is a block diagram illustrating a gateway according to another exemplary embodiment. Similarly to FIG. 2, the gateway in FIG. 3 includes a first communicator, a second communicator, and a controller, and the controller includes an electronic label registerer and a product information gateway.

The controller 200 may further include a reference value calculator 360. The reference value calculator 360 calculates a reference value based on information stored in a store system that has been received from a management server and stores the calculated reference value. The management server transmits, to each gateway, a sum of data amounts of all the electronic labels installed in the store. The reference value calculator 360 may divide a sum of data amounts of all the electronic labels by a number of gateways in a store to calculate a reference value that is a threshold of data amounts that may be registered by gateways. The gateway includes a storage in which and a reference value calculated by the reference value calculator 360 is stored. The storage may include a semiconductor memory, such as a hard disk or a flash memory, and the like.

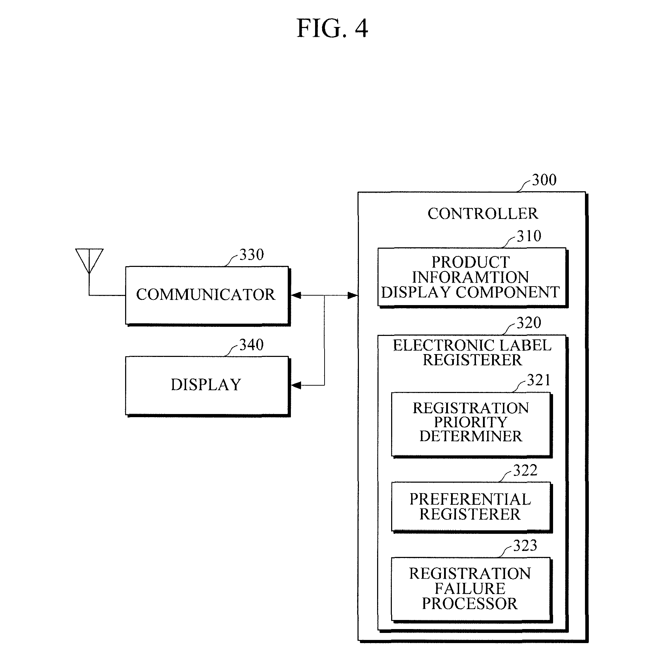

FIG. 4 is a block diagram illustrating an electronic label according to an exemplary embodiment. The electronic label includes a communicator, a display, and a controller. The controller includes a product information display component and an electronic label registerer. The communicator and the controller are integrated in a semiconductor chip as a System on Chip (SoC) for wireless communication. The SoC includes not only a communicator that processes wireless communications, but also a processor, a memory, and a timer. The processor operates as a main controller that controls the entire operation of the device. The timer operates even when the processor is in a sleep mode, and generates an interrupt signal at regular intervals determined by the processor to wake up the processor. The wake-up time slot may be determined by an electronic label management server in a manner that does not cause a conflict between electronic labels.

In one exemplary embodiment, the display displays product information received from a server. The display is an electronic paper display. Examples of the electronic paper display may include a twist ball type by Xerox Corporation utilizing an electrostatically charged hemispherical twist ball, an electrophoresis panel by E Ink Corporation utilizing an electrophoresis method and a microcapsule, or an electronic paper of a cholesterol liquid crystal by Kent Displays, Inc. utilizing cholesterol liquid crystal. The electronic paper display may include: a TFT substrate having a thin film transistor (TFT) formed on a polysilicon layer that is deposited on a plastic substrate; a transparent electrode substrate; and a microcapsule layer sealed between the TFT substrate and the transparent electrode substrate. The electronic paper display may include CMOS circuits formed by recrystallizing edges of the TFT substrate. The electronic paper display is operated at a voltage that is higher than a predetermined level and consumes minimal power while displaying.

In another exemplary embodiment, the display is a liquid crystal display. The liquid crystal display (LCD) or a liquid crystal display device is a type of thin display devices. The LCD, which consumes low power, is widely used in portable devices. A pixel of liquid crystal display includes two transparent electrodes that are connected, and polarized light filters are vertical to each other. At normal times, a regular arrangement of liquid crystals allows light transmission, but when a voltage is applied, an arrangement of liquid crystals is fixed such that light may not be transmitted but blocked.

In the exemplary embodiment, the product information display component communicates with a gateway via a communicator to receive product information received from a server and to output the received product information to the product information display component. For example, if a display is an electronic paper display, the product information display component is a display control circuit that outputs display data signals to the gate line and the data line. In another example, if the display is a liquid crystal display, the product information display component is a display control circuit that controls image frames to be displayed on the liquid crystal display. In yet another example, if the display is a segment liquid crystal display, the product information display component is a segment display control circuit that controls turning on/off of each segment of the segment liquid display.

The controller includes an electronic label registerer 320. The electronic label registerer preferentially transmits a registration request to a gateway having a small accumulated data amount of electronic labels that have been registered with the gateway among candidate gateways. The electronic labels scan wireless channels to determine gateways, which receive wireless signals that may be communicated, as candidate gateways. The electronic labels communicate with each gateway, and receive and collect information on an accumulated data amount of electronic labels registered with each gateway. Then, electronic label registerer 20 compares the collected information to request registration in order starting from a gateway having the smallest accumulated data amount.

The electronic label registerer may include a registration priority determiner and a preferential registerer. The registration priority determiner compares accumulated data amounts received sequentially from candidate gateways, and determines registration priorities in order starting from a gateway having the smallest data amount. According to the registration priorities determined by the registration priority determiner, the preferential registerer registers electronic labels with gateways. A registration request is transmitted to gateways in order starting from a gateway having the smallest data amount, thereby increasing the possibility of registration and preventing many electronic labels from being registered with a specific gateway.

The electronic label registerer may further include a registration failure processor. Once the preferential registerer fails to register an electronic label with a gateway, the registration failure processor determines the gateway to be the last in registration priority. Once an electronic label, of which registration with a gateway has been rejected, requests re-registration, the gateway determines its registration. In the case where there are at least two or more candidate gateways, an electronic label determines a gateway, which has rejected registration, to be the last gateway to request registration, so as not to transmit a re-registration request to the gateway immediately after being rejected.

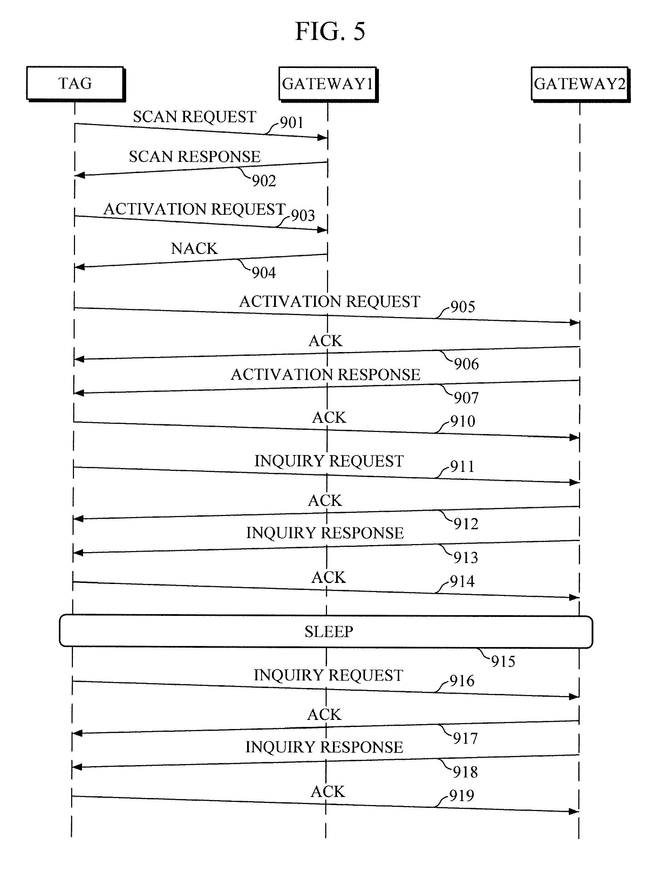

FIG. 5 is flowchart illustrating updating of product information after an electronic label is registered with a gateway according to an exemplary embodiment. An electronic label transmits a Scan Request signal by moving from one channel to another in a predetermined sequence in 901. Upon receiving the Scan Request signal, the gateway transmits a Scan Response signal to an electronic label in 902. Then, the electronic label transmits an Activation Request signal to the gateway in 903. If an accumulated data amount, which is obtained by adding a data amount of an electronic label that has requested registration to a sum of data amounts of previously registered electronic labels, is greater than a reference value, the gateway transmits a NACK signal to the electronic label in 904.

The electronic label, of which registration has been rejected, transmits an Activation Request signal to another gateway in 905. If an accumulated data amount, which is obtained by adding a data amount of an electronic label that has requested registration to a sum of data amounts of previously registered electronic labels, is lower than a reference value, the gateway transmits an ACK signal and an Activation Response signal to the electronic label in 906 and 907. Upon performing operations 906 and 907, the electronic is registered with a gateway that has transmitted an ACK signal and an Activation Response signal. The electronic label transmits an Inquiry Request signal to check whether there is product information to be updated in 911. If there is product information to be updated, the gateway transmits an ACK signal and an Inquiry Response signal in 912 and 913. Upon receiving product information to be updated, the electronic label transmits an ACK signal to the gateway in 914. In order to save battery power, after the electronic label remains in a sleep mode in 915 according to a predetermined time period, operations from 910 to 914 are repeated.

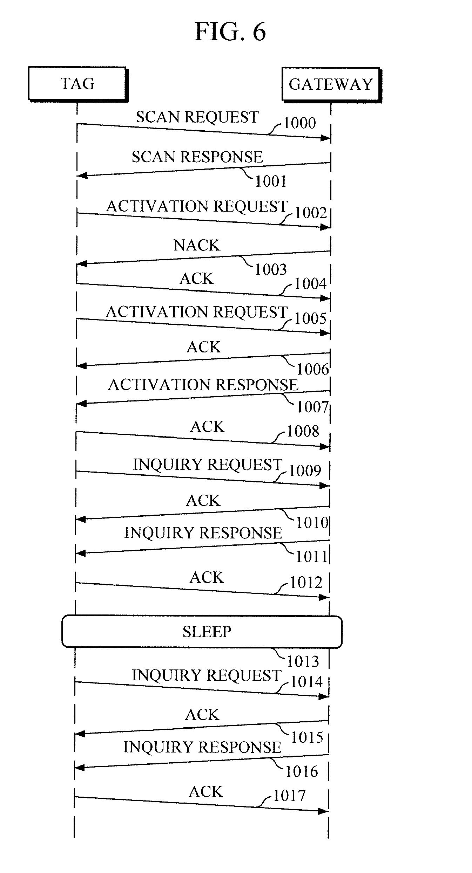

FIG. 6 is a flowchart illustrating updating of product information after an electronic label is registered with a gateway according to another exemplary embodiment. The electronic label transmits a Scan Request signal to a gateway by sequentially moving from one channel to another according to a specific order in 1000. Upon receiving the Scan Request signal, each gateway transmits a Scan Response signal to the electronic label in 1001. The gateway transmits a Scan Response signal, which includes information on a sum of data amounts of all the electronic labels previously registered with the gateway, to the electronic label that has transmitted the Scan Request signal. By repeating the process, a sum of data amounts of all the electronic labels that have been registered with each gateway, i.e., an accumulated data amount, may be received from all the candidate gateways that may be scanned by electronic labels. Then, the accumulated data amounts are compared to identify a gateway that has the smallest accumulated data amount, and an Activation Request signal is transmitted to the gateway having the smallest accumulated data amount in 1002. In response to receiving the Activation Request signal, the gateway registers the electronic label in a list of services, and transmits an Activation Response signal to the electronic label.

If an accumulated data amount, which is obtained by adding a data amount of an electronic label that has requested registration to a sum of data amounts of previously registered electronic labels, is greater than a reference value, the gateway transmits a NACK signal to the electronic label in 1003.

The electronic label, of which registration has been rejected by a gateway, transmits an ACK signal and an Activation Request signal to the gateway again in 1004 and 1005. Upon receiving a re-registration request from an electronic label, the gateway transmits an ACK signal and an Activation Request signal to the electronic label in 1006 and 1007. By performing operations 1006 and 1007, the electronic label is registered with the gateway that has transmitted the ACK signal and the Activation Response signal. The electronic label transmits an Inquiry Request signal to check whether there is product information to be updated in 1009. If there is product information to be updated, the gateway transmits an ACK signal and Inquiry Response signal in 1010 and 1011. Upon receiving product information to be updated, the electronic label transmits an ACK signal to the gateway in 1012. In order to save battery power, after the electronic label remains in a sleep mode in 1013 according to a predetermined time period, operations from 1014 to 1017 are repeated.

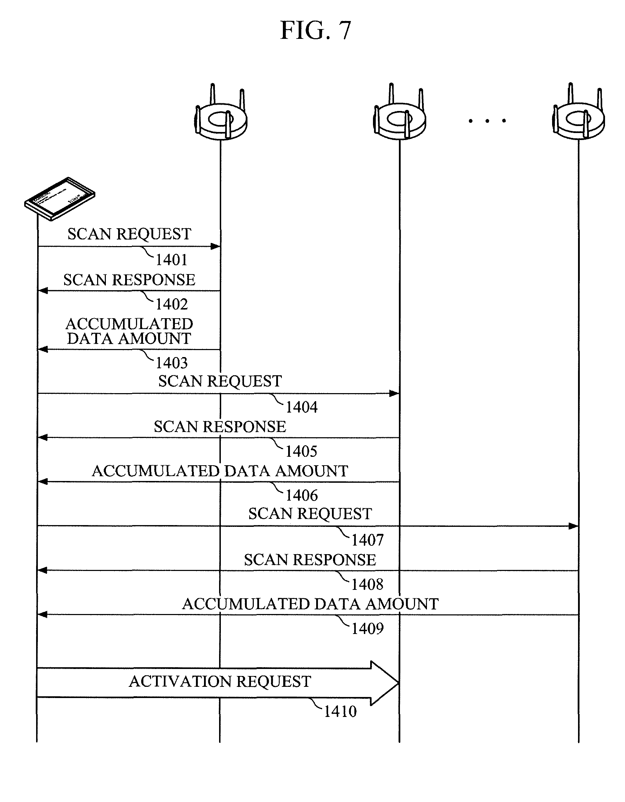

FIG. 7 is a flowchart illustrating registering an electronic label with a gateway according to an exemplary embodiment. The electronic label transmits a Scan Request signal to candidate gateways that are located within a near field communication range in 1401, 1404, and 1407. Upon receiving the Scan Request signal, a gateway transmits, to an electronic label, a Scan Response signal and an accumulated data amount of all the registered electronic labels in 1403, 1406, and 1409. In another example, a gateway that has received the Scan Request signal transmits, to the electronic label that has transmitted the Scan Request signal, a Scan Response signal that includes an accumulated data amount of all the registered electronic labels. Then, the electronic label receives information on accumulated data amounts from all the candidate gateways, and compares the received information to transmit a registration request signal to a gateway having the smallest data amount in 1410.

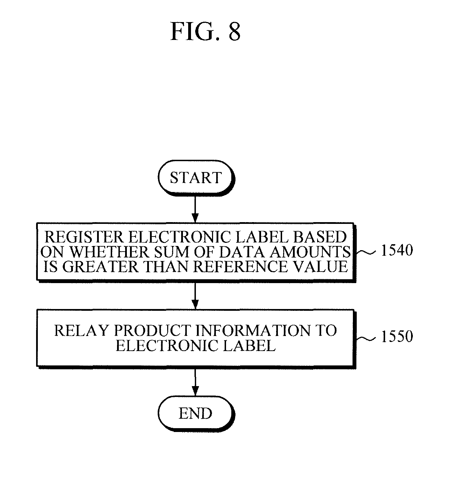

FIG. 8 is a flowchart illustrating a method of registering an electronic label by a gateway according to an exemplary embodiment. The method of registering an electronic label by a gateway includes relaying product information in 1550 and registering electronic labels in 1540. In 1540, electronic labels are registered based on whether a number of data amounts of all the registered electronic labels is greater than a reference value. The gateway determines whether to register an electronic label, which has requested registration, based on the size of data amounts of registered electronic labels. As a data size of images and/or characters to be displayed on each electronic label is different, data amounts to be transmitted from gateways to each electronic label may vary depending on the data size. Further, additional product information or other promotion information, which is displayed by some electronic labels, also increases the amount of data to be updated.

Determination on whether to register an electronic label, which has requested registration, may be made depending on the number of electronic labels that have been registered with the gateway, since in most cases, electronic labels have a similar amount of data or product information to be updated. In another example, determination on whether to register an electronic label, which has requested registration, may be made based on a data amount obtained by adding the sum of data amounts of previously registered electronic labels, i.e., a data amount to be processed by the gateway. A reference value that is used for registering electronic labels in 1540 may be calculated by a server and/or a gateway.

In relaying product information in 1550, a gateway communicates with a management server, and communicates with registered electronic labels to relay product information to the electronic labels. After an initial activation process, the gateway receives product information in 1550 by transmitting and receiving an information Inquiry Request frame and an information Inquiry Response frame, and displays the received information. In 1550, for example, the gateway communicates with a management server via a first communicator that is a wired network, and communicates with registered electronic labels via a second communicator, so as to relay product information to electronic labels. The gateway may communicate with electronic labels via a wireless network that is based on 2.4 GHz Zigbee physical layer.

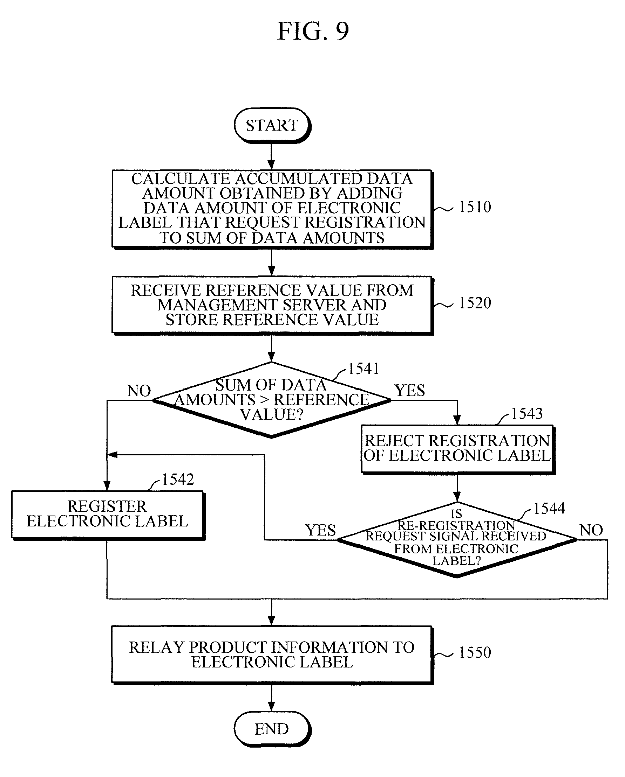

FIG. 9 is a flowchart illustrating a method of registering an electronic label by a gateway according to another exemplary embodiment. Registering electronic labels in 1540 may include calculating a data amount in 1510 and registering based on comparison in 1542 and 1543. In 1520, an accumulated data amount is calculated by adding a data amount of an electronic label that has requested registration to a sum of data amounts of registered electronic labels. Once a second communicator receives a registration request signal from an electronic label that has not been registered, a sum of data amounts of previously registered electronic labels is read from a storage in 1510. Then, a data amount of an electronic label that has transmitted a registration request signal is added to the sum of data amounts of previously registered electronic labels. A total sum of data amounts of previously registered electronic labels and an electronic label that has requested registration is a reference value that is used to determine whether to register the electronic label that has requested registration. If registration is not allowed, a value stored in a storage is not updated in 1510. If registration is successful, a value stored in the storage is updated in 1510 to a new accumulated amount of data, which is obtained by adding a data amount of a newly registered electronic label to a previous accumulated amount of data.

Registering based on comparison in 1541, 1542, and 1543 includes comparing an accumulated data amount calculated in 1510 to a reference value to determine whether to register an electronic label and registering the electronic label based on the determination. Depending on the data amounts of registered electronic labels, a gateway determines whether to register an electronic label that has requested registration. The data size of images and/or characters to be displayed on each electronic label is different. In registering based on comparison in 1541, 1542, and 1543, a reference value that is used for registering electronic labels is calculated by a server and/or a gateway. In registering based on comparison in 1541, 1542, and 1543, if an accumulated value calculated in 1510 is greater than a reference value, registration of an electronic label is rejected, and if the accumulated value is lower than a reference value, the electronic label is registered.

A method of registering an electronic label by a gateway may further include receiving a reference value in 1520. In receiving a reference value in 1520, a reference value is received from a management server and is stored. For example, the reference value may be determined by a manager by considering the number of electronic labels in the store, data amount of the electronic labels, and the number of gateways. In another example, the reference value may be automatically calculated based on the above consideration by a management server that manages information of electronic labels. In receiving a reference value in 1520, a reference is received from a server. A gateway includes a storage in which a reference value received by the reference value receiver may be stored.

Registering electronic labels in 1540 may include calculating a data amount in 1510 and registering based on comparison in 1541, 1542, and 1543. Registering electronic labels in 1540 may further include performing preferential registration in 1544. In performing preferential registration in 1544, once a re-registration request signal is received from an electronic label, of which registration was rejected, the electronic label is preferentially registered. If registration of an electronic label has been rejected by all the gateways that have been scanned by the electronic label, this may indicate that electronic labels having data amounts above a reference value have already been registered with all the gateways in the area, or other gateways are out of order. In this case, since an electronic label that has been rejected to be registered may not be connected to a network, the electronic label is preferentially registered.

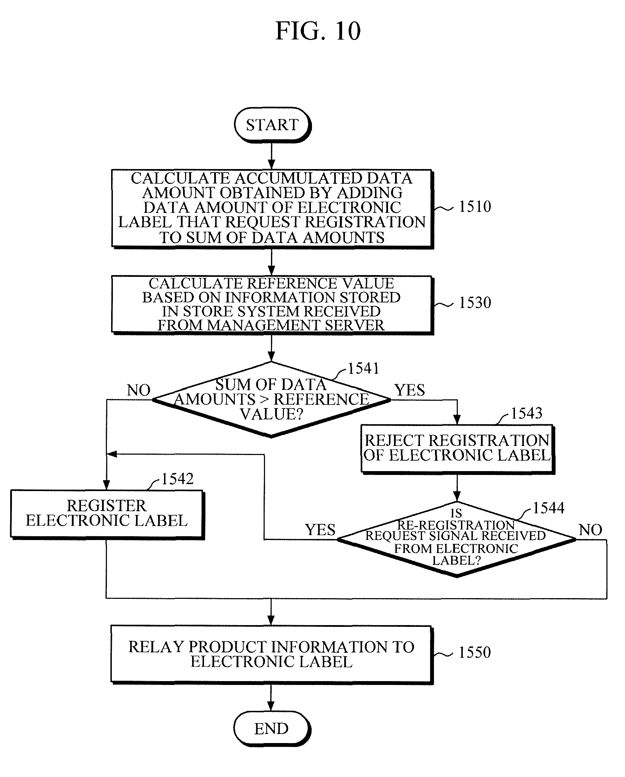

FIG. 10 is a flowchart illustrating a method of registering an electronic label by a gateway according to yet another exemplary embodiment. Similarly to FIG. 9, the method of registering an electronic label includes registering an electronic label and relaying product information. In the same manner as in FIG. 9, registering an electronic label includes calculating a data amount and registering based on comparison. The method of registering an electronic label by a gateway may further include calculating a reference value in 1530. A management server transmits a sum of data amounts of all the electronic labels in the store to each gateway. In calculating a reference value in 1530, for example, a reference value, which is a threshold of registering data amounts by gateways, may be calculated by dividing a sum of data amounts of all the electronic labels by the number of gateways in the store. The method of registering an electronic label includes storing a reference value in which the reference value calculated in 1530 is stored.

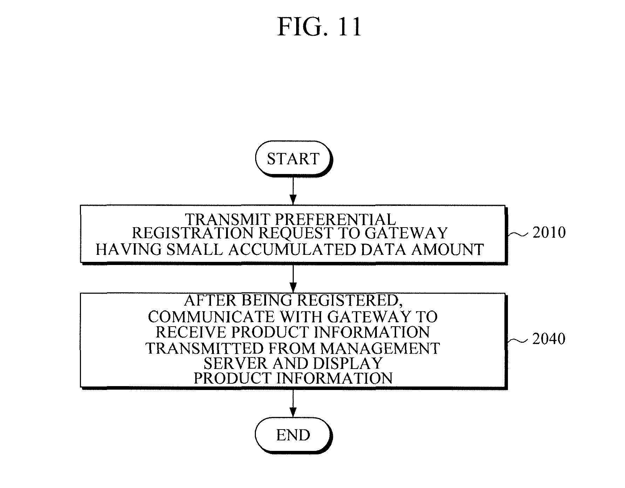

FIG. 11 is a flowchart illustrating a method of registering an electronic label according to an exemplary embodiment. The method of registering an electronic label includes registering an electronic label in 2010 and displaying product information in 2040. In registering an electronic label in 2010, an electronic label transmits a preferential registration request to a gateway having a small accumulated data amount of registered electronic labels among candidate gateways. An electronic label scans wireless channels to determine gateways, which receive wireless signals that may be communicated, as candidate gateways, and communicates with each gateway to receive and collect an accumulated data amount of electronic labels registered with each gateway. Then, the collected data amounts of each gateway are compared so that an electronic label may request registration in order starting from a gateway having the smallest accumulated data amount.

In displaying product information in 2040, an electronic label communicates with a gateway after being registered therewith, to receive product information transmitted from a management server and to output the received product information to a display. For example, if a display is an electronic paper display, displaying product information in 2040 includes outputting display data signals to the gate line and the data line. In another example, if a display is a liquid crystal display, displaying product information in 2040 includes controlling image frames to be displayed on the liquid crystal display. In yet another example, if a display is a segment liquid display, displaying product information in 2040 includes controlling turning on/off of each segment of the segment liquid display.

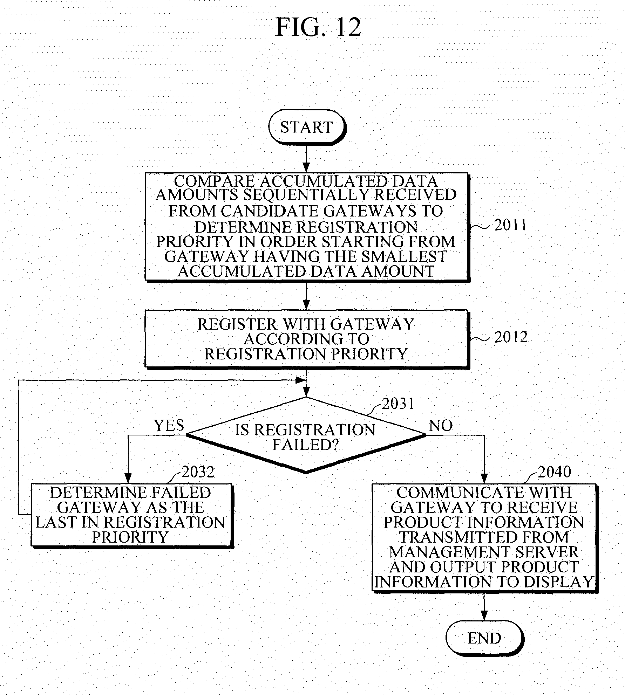

FIG. 12 is a flowchart illustrating a method of registering an electronic label device according to another exemplary embodiment. Registering an electronic label in 2010 may further include determining registration priorities in 2011 and performing preferential registration in 2012. In determining registration priorities in 2011, an electronic label compares accumulated data amounts sequentially received from candidate gateways to determine registration priorities, in which registration is performed in order starting from a gateway having the smallest accumulated amount of data. In performing preferential registration in 2012, an electronic label requests registration according to the determined registration priorities. A registration request is transmitted to gateways in order starting from a gateway having the smallest data amount, thereby increasing the possibility of registration and preventing many electronic labels from being registered with a specific gateway.

Registering an electronic label in 2010 may further include processing registration failures in 2031, 2032, and 2040. In processing registration failures, if an electronic label is failed to be preferentially registered with a gateway in a process of performing preferential registration, the electronic label determines the gateway as the last gateway to request registration. If an electronic label, which previously requested registration, requests re-registration with the gateway, the gateway determines to register the electronic label. In the case where there are at least two or more candidate gateways, an electronic label determines a gateway, which has rejected registration, to be the last gateway to request registration, so as not to transmit a re-registration request to the gateway immediately after being rejected.

In the present disclosure, overload on gateways may be reduced by properly adjusting a number of electronic labels registered with each gateway, and the speed of updating product information of the electronic labels may be increased by reducing channel occupation time.

A number of examples have been described above. Nevertheless, it should be understood that various modifications may be made. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims.

## Claims

1. A gateway, comprising:
a first communicator configured to communicate with a management server via a wired network;
a second communicator configured to communicate with an electronic label via near-field communication; and
a controller comprising:
a electronic label registerer configured to register an electronic label based on whether a sum of data amounts of registered electronic labels is greater than a reference value; and
a product information gateway configured to communicate with the management server via the first communicator and to communicate with the registered electronic labels via the second communicator, so as to relay product information to the electronic labels.

2. The gateway of claim 1, wherein electronic label registerer comprises:
a data amount accumulator configured to calculate an accumulated data amount obtained by adding a data amount of an electronic label that requests registration to a sum of data amounts of registered electronic labels; and
a comparison-based registerer configured to compare the accumulated data amount calculated by the data amount accumulator to the reference value to register the electronic label.

3. The gateway of claim 1, wherein the controller further comprises a reference value receiver configured to receive the reference value from the management server via the first communicator and to store the received reference value.

4. The gateway of claim 1, wherein the controller further comprises a reference value calculator configured to calculate the reference value based on information stored in a store system that has been received from the management server and to store the received reference value.

5. The gateway of claim 2, wherein the electronic label registerer further comprises a preferential registerer, which in response to receiving a re-registration request signal from an electronic label that has been rejected to be registered, is configured to register the rejected electronic label.

6. An electronic label comprising:
a communicator configured to communicate with a gateway via near-field communication;
a display; and
a controller comprising:
a product information display component configured to communicate with the gateways via the communicator to receive product information received by a server and to output the received product information; and
an electronic label registerer configured to request registration in order starting from a gateway having the smallest accumulated data amount of registered electronic labels among candidate gateways.

7. The electronic label of claim 6, wherein the electronic label registerer comprises:
a registration priority determiner configured to compare accumulated data amounts sequentially received from the candidate gateways and to determine registration priorities in order starting from a gateway having the smallest data amount; and
a preferential registerer configured to register electronic labels with the gateways according to the determined registration priorities.

8. The electronic label of claim 1, wherein the electronic label registerer further comprises a registration failure processor, which in response to the preferential registerer failing to register an electronic label with a gateway, is configured to determine the gateway with which registration has been failed, as the last gateway to request registration.

9. A method of registering an electronic label, the method performed by a gateway and comprising:
registering an electronic label based on whether a sum of data amounts of registered electronic labels is greater than a reference value; and
communicating with a management server and with the registered electronic labels to relay product information to the electronic labels.

10. The method of claim 9, wherein the registering of an electronic label comprises:
calculating an accumulated data amount by adding a data amount of an electronic label that requests registration to a sum of data amounts of the registered electronic labels; and
comparing the accumulated data amount to a reference value to determine whether to register the electronic label, so as to register the electronic label based on the comparison.

11. The method of claim 9, further comprising receiving a reference value from the management server and storing the received reference value.

12. The method of claim 9, further comprising calculating a reference value based on information stored in a store system that has been received from the management server and storing the calculated reference value.

13. The method of claim 10, further comprising, in response to receiving a re-registration request signal from an electronic label of which registration has been rejected, preferentially registering the rejected electronic label.

14. A method of registering an electronic label, the method performed by an electronic label and comprising:
transmitting a preferential registration request to a gateway having a small data amount of registered electronic labels among candidate gateways; and
communicating with the gateway after being registered therewith to receive product information transmitted from a management server and to output the received product information to a display.

15. The method of claim 14, further comprising:
comparing accumulated data amounts sequentially received from the candidate gateways to determine registration priorities in order starting from a gateway having the smallest data amount; and
preferentially registering an electronic label with a gateway according to the determined registration priorities.
